# FASCICULE DE BREVET EUROPEEN

(11) **EP 3 129 619 B1**
(45) Date de publication et mention de la délivrance du brevet: **27.02.2019**
(21) Numéro de dépôt: 15719802.9
(22) Date de dépôt: 03.04.2015
(51) Int. Cl.: F02C 3/10, F02C 7/277

(54) **DISPOSITIF D'ASSISTANCE À PROPERGOL SOLIDE D'UN SYSTÈME PROPULSIF D'UN HÉLICOPTÈRE MONOMOTEUR, HÉLICOPTÈRE MONOMOTEUR COMPRENANT UN TEL DISPOSITIF**
FESTTREIBSTOFFANTRIEBSVORRICHTUNG ZUR UNTERSTÜTZUNG DES ANTRIEBSSYSTEMS EINES EINMOTORIGEN HELIKOPTERS, EINMOTORIGER HELIKOPTER MIT SOLCH EINER VORRICHTUNG
SOLID PROPELLANT DEVICE FOR ASSISTING A PROPULSION SYSTEM OF A SINGLE-ENGINE HELICOPTER, SINGLE-ENGINE HELICOPTER COMPRISING SUCH A DEVICE

(30) Priorité: 08.04.2014 FR 1453123
(43) Date de publication de la demande: 15.02.2017
(73) Titulaire: Safran Aircraft Engines, 75015 Paris (FR); Safran Helicopter Engines, 64510 Bordes (FR)
(72) Inventeur: THIRIET, Romain, F-64110 Jurancon (FR); SERGHINE, Camel, F-64510 Boeil-Bezing (FR); MARCONI, Patrick, F-64110 Gelos (FR); BESSE, Jean-Louis, F-64800 Nay (FR); GUILLEMET, Pascal, Rond-point René Ravaud - Réau 77550 Moissy-Cramayel (FR); DEMEZON, Guillaume, F-33000 Bordeaux (FR); BARRAT, Philippe, F-33160 Saint Medard En Jalles (FR); DANGUY, François, Rond-point René Ravaud-Réau 77550 Moissy-Cramayel (FR); SANNINO, Jean-Michel, Rond-Point René Ravaud-Réau 77550 Moissy-Cramayel (FR); MARUCHEAU DE CHANAUD, Nicolas, Rond-Point René Ravaud-Réau 77550 Moissy-Cramayel (FR)
(74) Mandataire: Gevers & Orès
(86) Numéro de dépôt international: PCT/FR2015/050878
(87) Numéro de publication internationale: WO 2015/155450

(56) Documents cités:
- FR-A1- 2 992 024
- GB-A- 605 971
- GB-A- 1 389 403
- GB-A- 2 460 246
- US-A- 2 986 879

## Description

### 1. Domaine technique de l'invention

L'invention concerne un système propulsif d'un hélicoptère monomoteur. Un tel dispositif est particulièrement destiné à assister un hélicoptère monomoteur au cours d'un vol en autorotation suite à la panne du moteur de l'hélicoptère, ledit moteur pouvant être un turbomoteur, un moteur à combustion ou encore un moteur électrique.

### 2. Arrière-plan technologique

Un hélicoptère monomoteur est un hélicoptère qui n'est équipé que d'un seul turbomoteur ou moteur à combustion interne. Lorsque l'unique moteur d'un tel hélicoptère tombe en panne au cours d'une mission, le pilote doit très rapidement suivre une procédure de vol dégradée connue sous les termes de vol en autorotation.

Cette procédure est en pratique compliquée à mettre en oeuvre, comme expliqué, notamment, dans les documents GB 2 460 246 A et GB 605 971 A, en particulier l'étape visant à baisser le pas collectif au début de la manoeuvre et l'étape visant à synchroniser l'action sur le pas collectif et l'approche du sol en fin de manoeuvre. Les statistiques montrent d'ailleurs qu'en pratique plus de 50% des autorotations pratiquées par les pilotes conduisent à des endommagements sur les hélicoptères.

Il existe donc un besoin de disposer d'un dispositif d'assistance d'un hélicoptère monomoteur pouvant être utilisé pendant un vol en autorotation ou permettant de sécuriser le passage en vol en autorotation en cas de défaillance de l'unique moteur d'un hélicoptère monomoteur.

### 3. Objectifs de l'invention

L'invention vise à fournir un système propulsif d'un hélicoptère monomoteur permettant d'assister un hélicoptère monomoteur au cours d'un vol en autorotation, en cas d'arrêt non commandé du moteur.

L'invention vise aussi à fournir, dans au moins un mode de réalisation, un tel système qui n'a pas d'impact notable sur le poids total de l'hélicoptère.

L'invention vise aussi à fournir un procédé d'assistance d'un système propulsif d'un hélicoptère monomoteur.

### 4. Exposé de l'invention

Pour ce faire, l'invention concerne un système propulsif d'un hélicoptère monomoteur conforme aux caractéristiques de la revendication 1.

La divulgation concerne aussi un dispositif d'assistance d'un système propulsif d'un hélicoptère monomoteur comprenant un moteur relié à une boîte de transmission de puissance adaptée pour entraîner en rotation un rotor de l'hélicoptère, ledit moteur comprenant un générateur de gaz, une turbine libre reliée au générateur de gaz, un réducteur de vitesses et une roue libre, dite de puissance, reliée à ladite boîte de transmission de puissance, ledit dispositif d'assistance comprenant :
- une turbine d'entrainement en rotation d'un arbre de sortie adapté pour être relié mécaniquement à ladite boite de transmission de puissance,
- des moyens commandés d'alimentation de ladite turbine (18) d'entrainement en fluide sous pression pour permettre à ladite turbine de transformer l'énergie dudit fluide sous pression en énergie mécanique de rotation dudit arbre de sortie,
caractérisé en ce que ledit dispositif d'assistance comprend en outre une roue libre adaptée pour être agencée entre ledit arbre de sortie de ladite turbine d'entraînement et ladite boite de transmission de puissance suivant l'une ou l'autre des configurations suivantes :
- une configuration dans laquelle elle est reliée directement à un arbre agencé entre ladite roue libre de puissance dudit turbomoteur et ladite boite de transmission de puissance,
- une configuration dans laquelle elle est reliée directement à un arbre agencé entre ledit réducteur de vitesses dudit turbomoteur et ladite roue libre de puissance dudit turbomoteur,
- une configuration dans laquelle elle est reliée directement à un arbre agencé entre ladite turbine libre et ledit réducteur de vitesses dudit turbomoteur.

Un système selon l'invention permet donc de fournir de la puissance mécanique à la boite de transmission de puissance (ci-après désignée BTP) lorsque nécessaire. Un tel dispositif est donc particulièrement adapté pour assister mécaniquement l'hélicoptère au cours d'un vol en autorotation, notamment au cours des dernières phases du vol.

En outre, un tel système comprend une turbine d'entrainement et des moyens d'alimentation en fluide de cette turbine. Il s'agit d'équipements peu volumineux et qui présentent un poids négligeable par rapport au poids total d'un hélicoptère. Ils peuvent donc être installés sur un hélicoptère monomoteur sans dégrader les performances de l'hélicoptère. Ces équipements présentent également une fiabilité élevée, ce qui confère à un système selon l'invention de la robustesse et de la fiabilité.

L'utilisation d'un système selon l'invention permet donc de fiabiliser les vols en autorotation d'un hélicoptère et d'améliorer donc sensiblement les taux d'atterrissage sans dommage nécessitant une longue immobilisation de l'hélicoptère.

Un système selon l'invention permet en outre une pluralité de configurations. Par exemple, selon une configuration, il comprend un boîtier réducteur et une roue libre agencés entre l'arbre de sortie de la turbine d'entraînement et la boite de transmission de puissance (BTP).

Selon une autre configuration, la roue libre est reliée directement à un arbre agencé entre ladite roue libre de puissance dudit moteur et ladite boite de transmission de puissance. Une telle configuration présente également l'avantage de pouvoir fournir le surplus de puissance au plus près de l'entrée de la BTP. Par rapport à la configuration précédente, cette configuration présente en outre l'avantage de prévoir une liaison avec un arbre agencé dans le périmètre moteur.

Selon une autre configuration, la roue libre est reliée directement à un arbre agencé entre ledit réducteur de vitesses dudit moteur et ladite roue libre de puissance dudit moteur. Une telle configuration présente l'avantage de rester dans le périmètre moteur. En revanche, elle ne permet pas de pallier une éventuelle panne de la roue libre de puissance.

Selon une autre configuration, le système à ne comprend pas de boîtier réducteur. Un tel système comprend uniquement une roue libre reliée directement à un arbre en amont du réducteur de vitesses du moteur. Une telle configuration présente l'avantage de ne pas nécessiter un réducteur de vitesses spécifique au dispositif d'assistance étant donné qu'il utilise celui du moteur. Cela permet un gain de place et de masse.

Avantageusement et selon l'invention, lesdits moyens commandés d'alimentation en fluide de ladite turbine comprennent selon le cas des moyens pneumatiques, hydrauliques, pyrotechnique et/ou électriques.

Une turbine d'entrainement d'un système selon l'invention peut être de tous types. En particulier, elle est alimentée par un fluide gazeux sous pression. Les moyens de commande de la mise en action de ladite turbine, peuvent être pneumatiques, hydrauliques, électriques ou pyrotechniques.

Avantageusement et selon l'invention, lesdits moyens commandés d'alimentation de la turbine d'entrainement comprennent :
- au moins un générateur de gaz à propergol solide comprenant une sortie gaz reliée à une entrée de la turbine d'entrainement,
- au moins un dispositif d'allumage d'un générateur de gaz commandé électriquement.

Des tels moyens commandés d'alimentation de la turbine d'entrainement en fluide sous pression utilisent une technologie nouvelle qui comprend un générateur de gaz à propergol solide. Un tel générateur est relativement compact et peut s'intégrer sans difficultés par exemple soit dans un turbomoteur, soit à d'autres endroits de la chaine de transmission de puissance à la boîte de transmission principale. Un propergol solide permet par combustion (réaction d'oxydoréduction), la génération de produits de combustion gazeux hautement énergétiques. De tels moyens commandés d'alimentation de la turbine d'entrainement disposent d'une forte densité de puissance et d'énergie par rapport à un accumulateur électrique par exemple. En outre, de tels moyens d'alimentation bénéficient d'une autonomie complète vis-à-vis du réseau électrique de l'hélicoptère.

Lorsqu'une panne du moteur survient, le dispositif d'allumage du générateur de gaz est activé au moment opportun par le pilote (au tout début de la panne pour restaurer une brutale chute de tours rotor ou proche du sol). Cette activation entraîne le démarrage du générateur de gaz à propergol solide. Les gaz produits par le générateur entrainent en rotation la turbine d'entraînement de l'arbre de sortie, et donc la boite de transmission de puissance reliée mécaniquement à cet arbre de sortie.

Un dispositif d'assistance selon cette variante de l'invention permet donc d'assister rapidement un hélicoptère monomoteur ayant perdu l'usage de son moteur, en fournissant la puissance permettant de maintenir un entrainement de la boite de transmission de puissance et donc du régime rotor de l'hélicoptère. Un tel dispositif peut être actionné soit en début d'autorotation pour assister le pilote dans la phase critique qui vise à baisser le pas collectif, soit en fin d'autorotation au cours de la phase qui vise à synchroniser l'action sur le pas collectif et l'approche du sol.

Avantageusement et selon l'invention, le système comprend plusieurs générateurs de gaz à propergol solide de manière à avoir plusieurs sources distinctes de fourniture de puissance et permettre ainsi des activations successives dudit dispositif.

Avantageusement et selon cette variante, les moyens d'alimentation de la turbine d'entrainement comprennent en outre une vanne de distribution commandée par un boîtier électronique reliant la sortie de gaz d'un générateur de gaz à l'entrée de la turbine d'entraînement.

Avantageusement et selon une variante de l'invention, l'architecture du système propulsif comprend :
- un turbomoteur comprenant un générateur de gaz, une turbine libre alimentée par ledit générateur de gaz, un réducteur de vitesses agencé en sortie de la turbine libre et une roue libre, dite roue de puissance, agencée entre le réducteur de vitesses et une boite de transmission de puissance,
- un dispositif d'assistance comprenant une roue libre agencée entre l'arbre de sortie de la turbine d'entrainement et l'entrée du réducteur de vitesses du turbomoteur.

Avantageusement et selon une autre variante de l'invention, l'architecture du système propulsif comprend :
- un turbomoteur comprenant un générateur de gaz, une turbine libre alimentée par ledit générateur de gaz, un réducteur de vitesses agencé en sortie de la turbine libre et une roue libre, dite roue de puissance, agencée entre le réducteur de vitesses et une boite de transmission de puissance,
- un dispositif d'assistance comprenant un réducteur de vitesses et une roue libre agencés entre l'arbre de sortie de la turbine d'entrainement et la boite de transmission de puissance.

L'invention concerne également un hélicoptère comprenant un système propulsif caractérisé en ce que ledit système propulsif présente une architecture selon l'invention.

L'invention concerne également un procédé d'assistance d'un système propulsif d'un hélicoptère monomoteur comprenant un moteur relié à une boîte de transmission de puissance adaptée pour entraîner en rotation un rotor de l'hélicoptère, caractérisé en ce qu'il comprend :
- une étape de commande de l'alimentation en fluide sous pression d'une turbine d'entraînement relié mécaniquement à ladite boite de transmission de puissance,
- une étape de transformation par ladite turbine d'entraînement de la puissance du fluide sous pression en puissance mécanique pour entraîner en rotation ladite boîte de transmission de puissance.

L'invention concerne également un procédé d'assistance, une architecture d'un système propulsif et un hélicoptère caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un dispositif d'assistance d'un système propulsif d'un hélicoptère monomoteur selon un mode de réalisation qui ne fait pas partie de l'invention,
- la figure 2 est une vue schématique d'une architecture d'un système propulsif selon un mode de réalisation qui ne fait pas partie de l'invention comprenant un dispositif d'assistance selon un mode de réalisation,
- la figure 3 est une vue schématique d'une architecture d'un système propulsif selon un autre mode de réalisation de l'invention comprenant un dispositif d'assistance selon un mode de réalisation,
- la figure 4 est une vue schématique d'une architecture d'un système propulsif selon un autre mode de réalisation de l'invention comprenant un dispositif d'assistance selon un mode de réalisation,
- la figure 5 est une vue schématique d'une architecture d'un système propulsif selon un autre mode de réalisation de l'invention comprenant un dispositif d'assistance selon un autre mode de réalisation,
- la figure 6 est une vue schématique d'une architecture d'un système propulsif selon un autre mode de réalisation de l'invention comprenant un dispositif d'assistance selon un autre mode de réalisation.

### 6. Description détaillée d'un mode de réalisation de l'invention

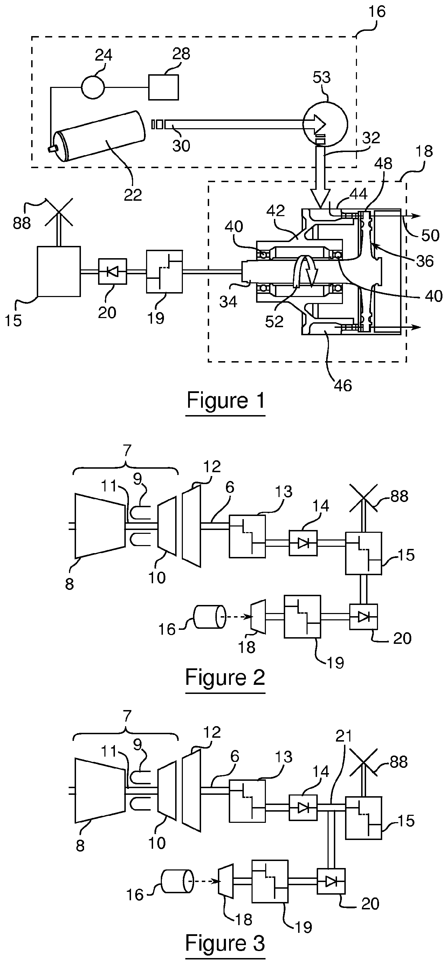

Un dispositif d'assistance comprend, tel que représenté sur la figure 1, une turbine 18 d'entrainement en rotation d'un arbre 34 de sortie relié mécaniquement à la boite 15 de transmission de puissance d'un hélicoptère, elle-même reliée à un rotor 88 de l'hélicoptère.

Il comprend également des moyens 16 commandés d'alimentation de la turbine 18 d'entrainement en fluide sous pression pour permettre à la turbine 18 de transformer l'énergie du fluide sous pression en énergie mécanique de rotation de l'arbre 34 de sortie.

Selon le mode de réalisation de la figure 1, les moyens 16 commandés d'alimentation de la turbine 18 d'entrainement sont des moyens pyrotechniques. Ils comprennent un générateur 22 de gaz à propergol solide, un dispositif 24 d'allumage du propergol solide, commandé électriquement, et un calculateur 28 relié au dispositif 24 d'allumage. La sortie de gaz du générateur 22 est reliée par une conduite à une entrée 44 de la turbine 18 d'entrainement.

Le générateur 22 de gaz comprend ici un corps de forme cylindrique contenant un ou plusieurs chargements de propergol solide de formes adaptées à la loi de débit de gaz souhaitée du générateur, ce corps servant de chambre de combustion. Il est à noter que la loi de débit souhaité peut être obtenue au moyen d'un choix approprié de la forme du chargement et/ou par l'inhibition totale ou partielle de certaines parties de chargement.

Après allumage de la surface du chargement de propergol, la surface du chargement brûle et progresse en produisant des gaz de combustion sous haute pression, selon la loi de débit résultant de la forme et de l'inhibition du chargement. Les gaz sont évacués en sortie du générateur et sont véhiculés vers l'entrée 44 de la turbine 18. Le cheminement des gaz est représenté par les flèches 30 et 32.

Le dispositif 24 d'allumage est commandé électriquement par le calculateur 28 et est destiné à activer la combustion du propergol dès qu'un signal correspondant est émis par le calculateur 28.

Le calculateur 28 est un boîtier électronique de commande tel que ceux couramment utilisés dans le domaine aéronautique. Lorsque le pilote détecte une perte de puissance sur l'unique turbomoteur de l'hélicoptère monomoteur, le pilote envoie un ordre au calculateur 28 qui active le dispositif 24 d'allumage de sorte que la turbine 18 d'entrainement soit alimentée par les gaz de combustion générés par la combustion du propergol solide.

La turbine 18 d'entrainement est par exemple une turbine du type supersonique. Elle comprend essentiellement un arbre 34 portant une roue de rotor 36, l'arbre 34 étant guidé en rotation par des paliers 40 montés dans un carter 42 de la turbine. Le carter 42 comprend un orifice radial formant l'entrée 44 de la turbine 18 et débouchant dans une cavité annulaire 46 d'alimentation de la turbine. Cette cavité 46 peut avoir une section constante d'amont en aval ou avoir au contraire une section évolutive d'amont en aval, l'optimisation de cette cavité étant effectuée par l'homme du métier.

Les gaz de combustion qui pénètrent dans la cavité 46 se détendent et s'écoulent à travers les aubes 48 de la roue 36 (flèches 50), ce qui entraîne en rotation la roue 36 et donc l'arbre 34 autour de son axe (flèche 52). Les gaz s'échappent ensuite de la turbine 18 à travers une tuyère de celle-ci et sont évacués vers l'extérieur (flèches 50). Un filtre 53 peut être monté en amont de la turbine de façon à limiter l'introduction de particules solides dans la veine de la turbine.

L'arbre 34 permet de transmettre un couple à la boite 15 de transmission de puissance par le biais d'un boîtier 19 réducteur et une roue libre 20.

Selon d'autres modes de réalisation, la turbine d'entrainement peut être une turbine centripète et de manière générale tous types de machines tournantes permettant de transformer la puissance d'un fluide en une puissance mécanique. Il peut par exemple s'agir d'un moteur à pignons droits tel que décrit dans la demande de brevet FR2990004 au nom du demandeur.

Les figures 2 à 6 présentent différents modes de réalisation de l'architecture d'un système propulsif d'un hélicoptère comprenant un dispositif d'assistance. Ces différentes architectures mettent en exergue différentes configurations d'accouplement entre l'arbre 34 et la boite 15 de transmission de puissance. Sur les figures 2 à 6, la turbine 18 et les moyens 16 de commande et génération de fluides énergétiques, ne sont pas détaillés à des fins de clarté.

Selon le mode de réalisation des figures 2 à 6, le système propulsif comprend soit un moteur à combustion interne ou un turbomoteur formé d'un générateur 7 de gaz alimentant une turbine 12 libre, un réducteur 13 de vitesses et une roue libre 14, dite de puissance, reliée à la boîte 15 de transmission de puissance. Le générateur 7 de gaz comprend de manière connue au moins un compresseur 8 d'air alimentant une chambre 9 de combustion d'un carburant dans l'air comprimé qui délivre des gaz chauds à au moins une turbine 10 de détente partielle des gaz qui entraîne en rotation le compresseur 8 via un arbre 11 d'entraînement. Les gaz entraînent ensuite la turbine 12 libre de transmission de puissance. Cette turbine 12 libre comprend un arbre 6 de transmission de puissance reliée à la boite 15 de transmission de puissance par le biais du réducteur 13 de vitesses et de la roue libre 14 de puissance. Cette roue libre 14 de puissance permet d'empêcher qu'un blocage mécanique du turbomoteur entraîne un blocage mécanique de la boite 15 de transmission de puissance et par extension du rotor de l'hélicoptère sur lequel ce turbomoteur est monté.

La figure 2 est un mode de réalisation dans lequel la roue libre 20 est reliée directement à la boite 15 de transmission de puissance. Ce mode de réalisation convient aussi à une motorisation à combustion interne.

La figure 3 est un mode de réalisation dans lequel la roue libre 20 est reliée à un arbre 21 agencé entre la roue libre 14 de puissance du turbomoteur et la boite 15 de transmission de puissance. Ce mode de réalisation convient aussi à une motorisation à combustion interne.

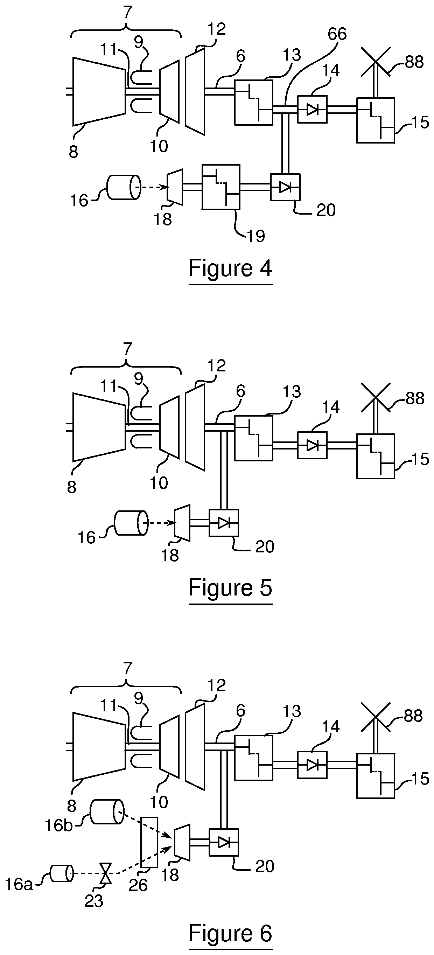

La figure 4 est un mode de réalisation dans lequel la roue libre 20 est reliée à la sortie ou à un étage intermédiaire du réducteur 13 de vitesses du turbomoteur. Cette liaison mécanique entre la roue libre 20 et la sortie du réducteur 13 est représentée par l'arbre 66 sur la figure 4.

La figure 5 est un mode de réalisation dans lequel la roue libre 20 est reliée à l'entrée du réducteur 13 de vitesses du turbomoteur. Selon ce mode de réalisation, le dispositif d'assistance ne comprend pas de boitier réducteur spécifique. Cette liaison mécanique entre la roue libre 20 et l'entrée du réducteur 13 est représentée par l'arbre 6 sur la figure 5.

Enfin, la figure 6 est un mode de réalisation dans lequel le dispositif d'assistance comprend au moins deux générateurs 16a, 16b de gaz à propergol solide.

Un tel dispositif d'assistance forme un système multi-coups qui dispose donc de plus de puissance qu'un système mono-coup. Dans le cas de ce système multi-coups, les moyens commandés d'alimentation de la turbine 18 d'entrainement peuvent comprendre, outre les générateurs 16a, 16b de gaz à propergol solide, une vanne 26 de distribution reliant la sortie de gaz des générateurs de gaz à l'entrée 44 de la turbine 18 d'entrainement, de manière à sélectionner quel générateur de gaz alimente la turbine 18 d'entrainement. Le calculateur qui permet de piloter le dispositif d'allumage des générateurs de gaz est donc relié à cette vanne 26 en vue de sa commande.

Selon une autre variante, une vanne 23 d'isolement est agencée entre le générateur 16a et la turbine 18 pour protéger le générateur 16a pendant le fonctionnement du générateur 16b. Une telle variante est particulièrement adaptée au cas où c'est toujours le générateur 16b qui fonctionne en premier.

Selon une autre variante, non représenté sur les figures, et pour le cas où il n'est pas déterminé quel générateur va fonctionner en premier, deux vannes 23 d'isolement sont agencées respectivement entre le générateur 16a et la turbine 18 et entre le générateur 16b et la turbine 18. Une telle variante permet de protéger chaque générateur pendant le fonctionnement de l'autre générateur.

La figure 6 représente simultanément une vanne 23 d'isolement et une vanne 26 de distribution à des fins de clarté. Cela étant, il n'est pas nécessaire de conserver simultanément ces deux vannes. En d'autres termes, trois architectures sont possibles : une architecture dans laquelle deux vannes d'isolement sont prévues ; une architecture dans laquelle une unique vanne d'isolement est prévue dans le cas où c'est toujours le même générateur qui est activé en premier ; et une architecture dans laquelle une unique vanne de distribution est prévue.

L'invention concerne également un procédé d'assistance d'un système propulsif d'un hélicoptère monomoteur comprenant un turbomoteur relié à une boîte de transmission de puissance adaptée pour entraîner en rotation un rotor de l'hélicoptère. Un tel procédé comprend une étape de commande de l'alimentation en fluide sous pression d'une turbine d'entraînement relié mécaniquement à ladite boite de transmission de puissance et une étape de transformation par ladite turbine d'entraînement de la puissance du fluide sous pression en puissance mécanique pour entraîner en rotation ladite boîte de transmission de puissance.

L'ordre de commande de l'alimentation en fluide sous pression de la turbine 18 d'entrainement est exécuté par le pilote de l'hélicoptère par le biais d'un contacteur logé dans le cockpit de pilotage. Ce contacteur permet par exemple d'alimenter via un réseau électrique dédié le calculateur 28, qui fait office d'initiateur pyrotechnique, dans le cas d'une alimentation de la turbine par des gaz issus d'un générateur de gaz à propergol solide tel que décrit en lien avec la figure 1.

Pour éviter une activation intempestive du dispositif d'assistance, les moyens de commande peuvent être configurés de sorte que l'ordre de commande n'est pas exécuté si au moins une condition prédéterminée n'est pas remplie. Chaque condition prédéterminée est caractéristique d'une situation qui rend l'entrainement de la BTP par le système dangereux ou inutile compte tenu des conditions de vol.

Par exemple, il peut être prévu des combinaisons logiques des conditions suivantes pour inhiber l'exécution de l'ordre de commande :
- l'hélicoptère vole à une hauteur supérieure à une hauteur minimale H_{sol_min} (par exemple, 100 pieds)
- la vitesse de rotation NR du rotor est supérieure à une vitesse de rotation prédéterminée minimale NRₘᵢₙ (par exemple NRₘᵢₙ du manuel de vol),

Bien évidemment, d'autres conditions peuvent être prévues selon les besoins et en fonction des suretés que l'on souhaite mettre en place.

L'invention ne se limite pas aux seuls modes de réalisation décrits. En particulier, selon d'autres modes de réalisation, le dispositif d'assistance peut comprendre plusieurs générateurs de gaz à propergol solide de sorte que la turbine d'entrainement peut être alimentée par l'un ou l'autre des générateurs. Cela permet de disposer d'un complément de puissance par au moins deux voies différentes éventuellement à deux instants du vol différents (au début et la fin de al procédure d'autorotation par exemple). En outre, cela permet d'avoir des stockeurs de taille différente, ce qui permet également de moduler le profil souhaité.

## Revendications

1. Système propulsif d'un hélicoptère monomoteur, comprenant un moteur relié à une boîte (15) de transmission de puissance adaptée pour entraîner en rotation un rotor (88) de l'hélicoptère, ledit moteur comprenant un générateur (7) de gaz, une turbine (12) libre reliée au générateur (7) de gaz, un réducteur (13) de vitesses et une roue libre (14), dite de puissance, reliée à ladite boîte (15) de transmission de puissance, le système propulsif comportant en outre un dispositif d'assistance comprenant :
- une turbine (18) d'entrainement en rotation d'un arbre (34) de sortie adapté pour être relié mécaniquement à ladite boite (15) de transmission de puissance,
- des moyens (16) commandés d'alimentation de ladite turbine (18) d'entrainement en fluide sous pression pour permettre à ladite turbine (18) de transformer l'énergie dudit fluide sous pression en énergie mécanique de rotation dudit arbre (34) de sortie,
**caractérisé en ce que** ledit dispositif d'assistance comprend en outre une roue libre (20) adaptée pour être agencée entre ledit arbre (34) de sortie de ladite turbine (18) d'entraînement et ladite boite (15) de transmission de puissance suivant l'une ou l'autre des configurations suivantes :
- une configuration dans laquelle elle est reliée directement à un arbre (21) agencé entre ladite roue libre (14) de puissance dudit turbomoteur et ladite boite (15) de transmission de puissance,
- une configuration dans laquelle elle est reliée directement à un arbre (66) agencé entre ledit réducteur (13) de vitesses dudit turbomoteur et ladite roue libre (14) de puissance dudit turbomoteur,
- une configuration dans laquelle elle est reliée directement à un arbre (6) agencé entre ladite turbine (12) libre et ledit réducteur (13) de vitesses dudit turbomoteur.

2. Système propulsif selon la revendication 1 **caractérisé en ce que** lesdits moyens (16) commandés d'alimentation de ladite turbine (18) d'entrainement du dispositif d'assistance comprennent des moyens pneumatiques, hydrauliques, pyrotechnique et/ou électriques.

3. Système propulsif selon la revendication 1, **caractérisé en ce que** lesdits moyens (16) commandés d'alimentation de ladite turbine (18) d'entrainement comprennent :
- au moins un générateur (22) de gaz à propergol solide comprenant une sortie gaz reliée à une entrée (44) de la turbine d'entrainement,
- au moins un dispositif (24) d'allumage d'un générateur de gaz (22) commandé électriquement.

4. Système propulsif selon l'une des revendications 1 à 3, **caractérisé en ce que** le dispositif d'assistance comprend plusieurs générateurs de gaz à propergol solide de manière à avoir plusieurs sources distinctes de fourniture de puissance.

5. Système propulsif selon les revendications 3 et 4 prises ensemble, **caractérisé en ce que** lesdits moyens (16) d'alimentation de ladite turbine (18) d'entrainement du dispositif d'assistance comprennent en outre une vanne (26) de distribution commandée par un boîtier (28) électronique reliant la sortie de gaz des générateurs (22) de gaz à l'entrée (44) de la turbine d'entraînement.

6. Hélicoptère comprenant un système propulsif selon l'une des revendications 1 à 5.

## Patentansprüche

1. Antriebssystem eines einmotorigen Hubschraubers, umfassend einen Motor, der mit einem Kraftübertragungsgetriebe (15) verbunden ist, das dafür eingerichtet ist, einen Rotor (88) des Hubschraubers drehend anzutreiben, wobei der Motor einen Gasgenerator (7), eine mit dem Gasgenerator (7) verbundene freie Turbine (12), einen Drehzahlreduktor (13) und ein sogenanntes freies Kraftrad (14) umfasst, das mit dem Kraftübertragungsgetriebe (15) verbunden ist, wobei das Antriebssystem weiter eine Hilfsvorrichtung beinhaltet, welche umfasst:
- eine Turbine (18) zum drehenden Antreiben einer Ausgangswelle (34), die dafür eingerichtet ist, mechanisch mit dem Kraftübertragungsgetriebe (15) verbunden zu werden,
- gesteuerte Mittel (16) zum Speisen der Antriebsturbine (18) mit Druckfluid, um es der Turbine (18) zu ermöglichen, die Energie des Fluids unter Druck in mechanische Drehenergie der Ausgangswelle (34) umzuwandeln,
**dadurch gekennzeichnet, dass** die Hilfsvorrichtung weiter ein freies Rad (20) umfasst, das dafür eingerichtet ist, zwischen der Ausgangswelle (34) der Antriebsturbine (18) und dem Kraftübertragungsgetriebe (15) gemäß der einen oder der anderen der folgenden Konfigurationen angeordnet zu werden:
- einer Konfiguration, bei der dasselbe direkt mit einer Welle (21) verbunden ist, die zwischen dem freien Kraftrad (14) des Turbomotors und dem Kraftübertragungsgetriebe (15) angeordnet ist,
- einer Konfiguration, bei der dasselbe direkt mit einer Welle (66) verbunden ist, die zwischen dem Drehzahlreduktor (13) des Turbomotos und dem freien Kraftrad (14) des Turbomotors angeordnet ist,
- einer Konfiguration, bei der dasselbe direkt mit einer Welle (6) verbunden ist, die zwischen der freien Turbine (12) und dem Drehzahlreduktor (13) des Turbomotors angeordnet ist.

2. Antriebssystem nach Anspruch 1, **dadurch gekennzeichnet, dass** die gesteuerten Mittel (16) zum Speisen der Antriebsturbine (18) der Hilfsvorrichtung pneumatische, hydraulische, pyrotechnische und/oder elektrische Mittel umfassen.

3. Antriebssystem nach Anspruch 1, **dadurch gekennzeichnet, dass** die gesteuerten Mittel (16) zum Speisen der Antriebsturbine (18) umfassen:
- mindestens einen Raketenfesttreibstoff-Gasgenerator (22), der einen mit einem Eingang (44) der Antriebsturbine verbundenen Gasausgang umfasst,
- mindestens eine elektrisch gesteuerte Zündvorrichtung (24) eines Gasgenerators (22).

4. Antriebssystem nach einem der Ansprüche 1 bis 3, **dadurch gekennzeichnet, dass** die Hilfsvorrichtung mehrere Raketenfesttreibstoff-Gasgeneratoren umfasst, um mehrere getrennte Kraftzufuhrquellen aufzuweisen.

5. Antriebssystem nach den Ansprüchen 3 und 4 zusammengenommen, **dadurch gekennzeichnet, dass** die Mittel (16) zum Speisen der Antriebsturbine (18) der Hilfsvorrichtung weiter ein von einem elektronischen Bauelement (28) gesteuertes Absperrorgan zur Verteilung (26) umfassen, das den Gasausgang der Gasgeneratoren (22) mit dem Eingang (44) der Antriebsturbine verbindet.

6. Hubschrauber, der ein Antriebssystem nach einem der Ansprüche 1 bis 5 umfasst.

## Claims

1. Single-engine helicopter propulsion system, comprising an engine connected to a power transmission gearbox (15) suitable for rotating a rotor (88) of the helicopter, said engine comprising a gas generator (7), a free turbine (12) connected to the gas generator (7), a speed reduction gearbox (13) and a free wheel (14), referred to as a power free wheel, connected to said power transmission gearbox (15), said assistance device comprising:
- a turbine (18) for driving in rotation an output shaft (34) suitable for being mechanically connected to said power transmission gearbox (15),
- controlled means (16) for supplying said drive turbine (18) with pressurised fluid in order to allow said turbine (18) to transform the energy from said pressurised fluid into mechanical power for rotating said output shaft (34),
**characterised in that** said assistance device further comprises a free wheel (20) suitable for being arranged between said output shaft (34) of said drive turbine (18) and said power transmission gearbox (15) in one of the following configurations:
- a configuration in which it is directly connected to said power transmission gearbox (15),
- a configuration in which it is directly connected to a shaft (21) arranged between said power free wheel (14) of said turboshaft engine and said power transmission gearbox (15),
- a configuration in which it is directly connected to a shaft (66) arranged between said speed reduction gearbox (13) of said turboshaft engine and said power free wheel (14) of said turboshaft engine,
- a configuration in which it is directly connected to a shaft (6) arranged between said free turbine (12) and said speed reduction gearbox (13) of said turboshaft engine.

2. Propulsion system according to claim 1, **characterised in that** said controlled supply means (16) of said drive turbine (18) comprise pneumatic, hydraulic, pyrotechnic and/or electrical means.

3. Propulsion system according to claim 1, **characterised in that** said controlled supply means (16) of said drive turbine (18) comprise:
- at least one solid-propellant gas generator (22) comprising a gas outlet connected to an inlet (44) of the drive turbine,
- at least one device (24) for igniting an electrically controlled gas generator (22).

4. Propulsion system according any of the claims 1 to 3, **characterised in that** it comprises a plurality of solid-propellant gas generators such that there are a plurality of separate sources for providing power.

5. Propulsion system according to claims 3 and 4, taken together, **characterised in that** said means (16) for supplying said drive turbine (18) further comprise a dispensing valve (26) controlled by an electronics module (28) connecting the gas outlet of the gas generators (22) to the inlet (44) of the drive turbine.

6. Helicopter comprising a propulsion system according to any of claims 1 to 5.
